# EUROPEAN PATENT APPLICATION

(11) **EP 2 581 257 A2**
(43) Date of publication of application: **17.04.2013**
(21) Application number: 12187752.6
(22) Date of filing: 09.10.2012
(51) Int. Cl.: B60L 11/18

(54) **Battery charger for electric vehicles**

(30) Priority: 11.10.2011 GB 201117496
(71) Applicant: Nissan Motor Manufacturing (UK) Ltd., Cranfield Bedfordshire MK43 0DB (GB)
(72) Inventor: Wilson, Steve, Cranfield, Bedfordshire MK430DB (GB)

(57) **Abstract**

A battery charger 10 for an electric vehicle comprising a charging controller 20 for identifying parameters of a power supply connected to the battery charger 10, and an output power regulator 35 responsive to the charging controller 20 for regulating a charging current to a vehicle battery, and wherein the charging controller initially determines an initial charging current based upon the geographic location of the power supply.

## Description

### Field of the Invention

The present invention relates to battery chargers, in particular battery chargers for use in electric vehicles. The invention also relates to a method of charging a battery for an electric vehicle.

### Background of the Invention

Electric vehicles (EVs) offer the potential for many users to complete the majority of their journeys without relying on fossil fuels for motive power. However, batteries in EVs must be periodically recharged. Batteries are most commonly recharged from the power grid, for example either at home using a domestic electrical supply or by using a dedicated charging point.

Due to the high capacity nature of EV batteries, charging points are specifically designed to permit rapid and frequent recharging of EV batteries. This may be achieved by providing a power supply with a higher voltage and/or current than might be available from a typical domestic wall socket.

If the user has no choice but to recharge their vehicle using a standard domestic wall socket supply, the recharge cycle will take considerably longer than if they were using a dedicated recharging point. Use of standard domestic power outlets to recharge an EV battery has the added disadvantage that the depleted battery has the potential to draw more current during the charging cycle than the power outlet may safely supply. This may lead to the domestic power outlet becoming hot, and could blow fuses or cause the domestic circuit breaker to trip, which may adversely affect other devices on the same circuit.

Additionally, the characteristics of domestic supplies can differ from country to country. For example, household outlets vary between 1.5 kW(in the US, Canada, Japan, and other countries with a 110 V supply) to 3 kW (in countries with 240 V supply). Many European countries feed domestic consumers with a 3 phase system fused at 16-25 A allowing for a theoretical capacity around 20-30 kW.

Further, dedicated charging stations can have different supply characteristics. Even under standards such as IEC 62196 and IEC 61851 different charging modes are possible. For example, the SAE J1772-2009 connector can supply 16.8 kW (240 V, 70 A), and the VDE-AR-E 2623-2-2 connector in Europe provides up to 43.5 kW (400 V, 63 A, three-phase). CHAdeMO DC Fast Charge charging stations can supply 62.5 kW (500V DC, 125 A).

High power charging stations reduce charging time significantly but can have an impact on the car's charging electronics and battery chemistry. The method of charging the battery cells can have an impact on battery performance, and non-optimal charging protocols can lead to batteries overheating during charging, and can lead to decreased performance and decreased operating life.

Known battery chargers have limited ability to identify the type of power supply to which they are connected. This can lead to damaged power supplies or batteries, for example, where the charger has connected to a higher level of power supply than expected. Additionally, if the full potential of a power supply is not identified and utilised then the charging cycle can take longer than it would have taken if the characteristics of the power supply had been identified and the battery charging optimised.

Accordingly, it is an object of the invention to provide a battery charger for electric vehicles that identifies characteristics of a power supply and optimises battery charging to safely minimise recharge time for the battery.

### Summary of the Invention

According to the present invention there is provided an apparatus and method as claimed in the independent claims.

By providing a battery charger that can identify the type and likely capacity of a power supply based on geographical location, the battery controller can minimise the recharge time for an EV regardless of what kind of power supply to which the user is connected. It can do this safely without exceeding charging parameters for a given power supply.

The charging characteristics may be identified from the geographic location of the charging point, whether it be a domestic source in one country or region with a specific voltage/current specification, or in another country with a different specification, or if the location equates to a known location for a dedicated charging station, for example a CHAdeMO station. Thus the characteristics of the connected power supply may be quickly ascertained and battery charging optimised accordingly.

Preferably, geographical location is determined by reference to a global navigation satellite system or other suitable means such as dead reckoning, and the optimum charging parameters are determined by reference to a database of charging stations.

Preferably, the charging controller determines if the power supply is a domestic power supply or an electric vehicle charging station.

Preferably, the charging controller determines the electrical characteristics of the power supply. The electrical characteristics may include determining the presence of an earth connection or determining power supply circuit resistance. This advantageously allows the battery charger to further optimise battery charging.

The battery charger may include means to detect if a temperature threshold has been reached and to switch the battery cell charging protocol between sequential and parallel charging schemes. This advantageously avoids overheating the batteries during charging.

Preferably, the electric vehicle battery charger may also be arranged such that current draw on the connected power supply may be increased until a voltage drop is in the power supply is detected, whereupon a maximum current draw on the power supply is determined to be the last current value where no voltage drop was detected. This advantageously allows the battery charger to optimise battery charging by finding the highest stable level of charging for a power supply. This safely minimises charging time.

Preferably, the method of charging an electric vehicle battery includes the step where the current draw on the connected power supply is increased until a voltage drop is in the power supply is detected, whereupon a maximum current draw on the power supply is determined to be the last current value where no voltage drop was detected.

### Brief Description of the Drawings

The present invention will now be described, by way of example only, with reference to the accompanying drawings, in which:
Figure 1 is a block diagram of an apparatus for charging an electric vehicle battery;
Figure 2 illustrates a flowchart of an operating sequence for charging an electric vehicle battery according to an embodiment of the invention;
Figure 3 illustrates a detail of the operating sequence shown in figure 2;
Figure 4 illustrates a flowchart of an operating sequence for charging an electric vehicle battery according to an embodiment of the invention; and
Figure 5 illustrates a flowchart of an operating sequence for charging an electric vehicle battery according to an embodiment of the invention;

In the drawings, like parts are denoted by like reference numerals.

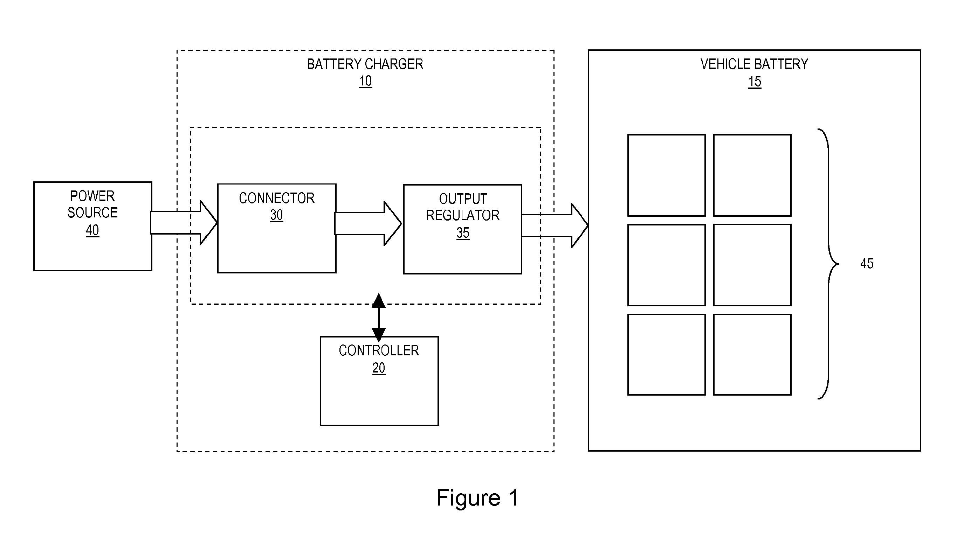

Figure 1 shows a battery charger 10 for charging an electric vehicle (EV) battery 15. The battery charger 10 comprises charging controller 20 responsive to connector 30 and output regulator 35.

The connector 30 connects the batter charger to a power source 40, and the output regulator 35 connects the charger to the vehicle battery 15. The vehicle battery 15 is shown here comprised of multiple battery cells 45.

In use, the power source 40 is connected to the battery charger by connector 30. The controller 20 is arranged to identify the type and likely capacity of the power supply to which the vehicle is connected.

The output regulator 35 regulates the charging current to maximise charging efficiency. For higher specification power supplies, such as dedicated electric vehicle charging stations, a much higher current can be drawn than, for example, domestic electrical supplies, and therefore the battery 15 can be charged quicker.

The charging controller determine parameters of the power supply and control the output regulator 35 to output an optimised current/voltage to safely charge the battery 15 in the fastest time possible. The charging controller 20 initially identifies the type and therefore the likely capacity of the power supply 40 by geographical location. It can then further optimise battery charging by analysing the electrical response to an initial load drawn by the battery charger.

The geographical location can be determined by suitable global navigation satellite system, such as GPS, and/or via a suitable mobile telecommunications network. Other means such as dead reckoning can also be used.

The charging controller identifies the type of power supply by determining the geographical location and referring to this location in a database. The database contains geographical information on the location of dedicated power supplies. The charging controller can then determine if there is a dedicated charging station at the current location and set the initial charging parameters accordingly. The database can contain information on the type of charging station at that location, for example, what charging protocol (CHAdeMO, etc.) is used.

The database can be updated on information obtained from a charging station. For example, if the information about the power supply's parameters is incorrect, the database entry for the power supply can be updated. The database can be a web based database or one which is stored locally on board the vehicle.

The charger controller can determine if it is possible to further optimise battery charging by analysing the electrical characteristics of the power supply, for example by analysing the voltage available upon connection to the supply

The charging controller 10 optimises the current draw during a charging cycle based on an analysis of the capacity of the power supply 40. In this way, the controller will always try to minimise the charging cycle time for the EV regardless of whether the user is relying on a domestic power outlet or a dedicated EV charging point.

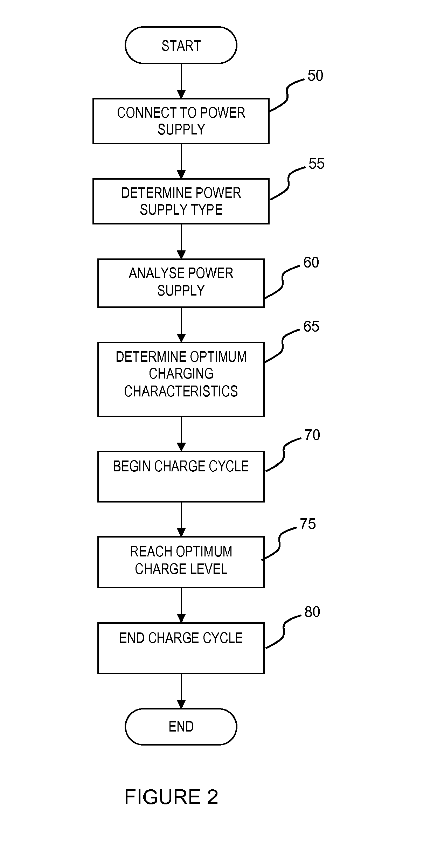

Figure 2 illustrates a flowchart of an operating sequence for charging an electric vehicle battery.

The charging controller 20 is activated (step 50) when the battery is connected to the power supply 40.

Once activated, the controller determines the power supply type. This is initially done by determining the location of the vehicle as described above and, based on geographical data, the controller determines (step 55) whether the vehicle is in the vicinity of a dedicated charging point or in a residential location.

The charging controller 20 will set the output regulator 35 to maintain an output current and voltage appropriate to the power supply type that has been initially identified by geographical location. For example, 500V dc at 125A if the controller has determined that the user has connected to CHAdeMO type charging station, or 240V at 12A for Level 2 SAE type charging (e.g. from a domestic source).

The charging controller can perform further diagnostic steps to optimise charging. Alternatively, the battery charger can proceed to charge the battery based solely on the type of power supply determined by geographical location.

After determining the geographical location of the vehicle and setting initial charging parameters, the controller analyses the power supply characteristics (step 60).

The controller determines the optimum charging characteristics of the power supply based on both the geographical location and electrical characteristics data (step 65).

For example, the controller may determine that the battery charger 10 is connected to a dedicated charging point because the geographical data matches the location of a dedicated charging station. However this may be contraindicated by the electrical characteristics of the power supply so the charging parameters will be altered accordingly.

Such errors in parameters derived from geographical data can be due several factors. For example, the geographical database used by the charging controller is out of date. The power supply may have developed a fault, or for some other reason cannot operate at the advertised parameters for that type of power supply.

Similarly the power supply could be capable of operating at above its advertised parameters. This analysis and error checking improves the safety of the charging process.

Once the optimum charging characteristics have been determined, the battery charger can begin the charge cycle (step 70). The charger 10 will charge the battery until an optimum charge level is detected (step 75). The charging controller ends the charge cycle (step 80).

At step 65 of the operating sequence shown in figure 2, the controller 10 analyses the various data it has gathered and determines the maximum current possible for the connected power supply 40 based on the data. The charging controller can also select the optimum charging protocol based on other received data. This might include additional steps beyond choosing the maximum charge current, such as whether to is better charge the battery cells 45 sequentially or in parallel. Other data, such as local temperature or battery temperature or battery conditions can also be taken into account by the charging controller 10 when selecting the optimum charging protocol.

During the charge cycle, the controller can carry out further tests on the power supply and charging conditions to ensure that optimum charging is maintained.

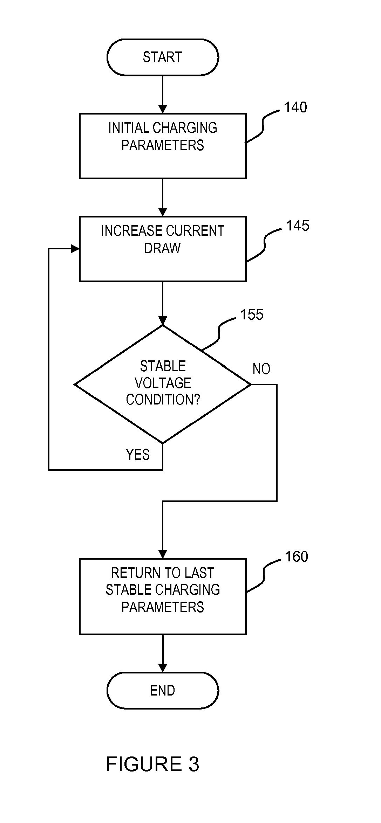

Figure 3 illustrates a further detail of the operating sequence shown in figure 2. The charging controller 20 can check the initial charging conditions determined by the geographical location and electrical characteristics of the power supply to further optimise battery charging. This can be done during the charge cycle (steps 70 to 80),

Referring to Figure 3, the controller begins from initial charging parameters (step 140) and increases the current drawn for the power supply (step 145). The power supply is monitored (step 155) to check if the voltage supply is stable. This comprises checking if there is a voltage drop in the power supply after the current draw has been increased.

The controller voltage supply is considered to be stable if there is no voltage drop over a preset time period. The controller increases the current draw again (step 145), and repeats the process as shown until a voltage drop is registered.

If a voltage drop is registered within the preset time period then the voltage supply is not considered to be stable and this level of charging should not be used. The controller then selects the last known stable parameters (step 160). This process maximises over the initial charging parameters.

This process can be done either at the start of the charge cycle (step (70), or during the charging cycle itself. The controller 20 can perform this optimisation on a regular basis to take into account any dynamically changing conditions that might affect battery charging. Charging conditions could change because of changes in the ambient temperature/weather conditions at the charging station, for example. There might also be changes in the quality of the power supply due to additional users on the line the power supply draws its power from.

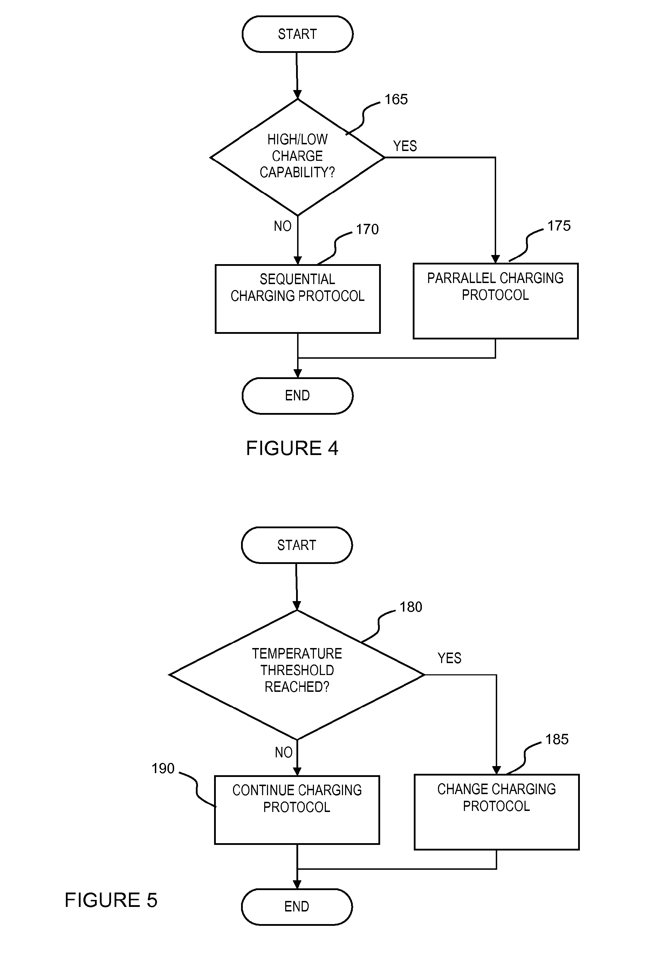

Figure 4 illustrates a flowchart of an operating sequence for charging an electric vehicle battery. In this example the charging protocol can be changed to take account of charging capacity and capability of the EV battery 15.

In the sequence shown, the charging controller determines if the battery has a high or low charge capability (step 165). If the battery has a high charge capability a parallel cell charging protocol is selected (step 175). If a low charge capability is determined then a sequential cell charging protocol is selected (step 175).

The recharge controller adjusts the charge current drawn on the supply by recharging groups of cells in sequence, rather than attempting to recharge all the cells simultaneously. The charging controller 20 can recharge as many or as few cells as the power supply will safely supply, and can be arranged to recharge calls in a sequence to ensure each cell is discharged / recharged in such a way as to optimise battery performance and operating life. The charging controller can be arranged to recharge cells in a sequence so as to manage heat build-up within the battery unit during recharging.

Figure 5 illustrates a flowchart of an operating sequence for charging an electric vehicle battery. This shows an additional step where the charging controller can change the charging protocol it currently uses depending upon temperature threshold information.

The charging controller can monitor the battery temperature. If a preset temperature threshold is detected (step 180) then the charging controller 20 can change the battery charging protocol (step 185). If no threshold has been reached then charging controller 20 continues with the present charging protocol (step 190).

For example, if the charging controller 20 detects that the battery has passed a maximum safe operating temperature it can change the charging protocol being used. For, example, it can switch from a parallel cell charging protocol to a sequential cell charging protocol. Another option is to lower the current and voltage draw from the power supply.

## Claims

1. An electric vehicle battery charger comprising:
a charging controller for identifying parameters of a power supply connected to the battery charger;
an output power regulator responsive to the charging controller for regulating a charging current to a vehicle battery;
wherein the charging controller determines an initial maximum charging current based upon the geographic location of the power supply.

2. An electric vehicle battery charger according to claim 1 wherein the geographical location is determined by reference to a global navigation satellite system.

3. An electric vehicle battery charger according to claim 1 wherein the geographical location is determined by dead reckoning.

4. An electric vehicle battery charger according to any preceding claim wherein charging parameters for a power supply are determined by reference to a database containing geographic location data for power supplies.

5. An electric vehicle battery charger according to any preceding claim wherein the charging controller determines if the power supply is a domestic power supply or is an electric vehicle charging station.

6. An electric vehicle battery charger according to any preceding claim wherein the charging controller determines electrical characteristics of the power supply

7. An electric vehicle battery charger according to claim 6 wherein the electrical characteristics include determining the presence of an earth connection

8. An electric vehicle battery charger according to claim 6 or 7 wherein the electrical characteristics include determining power supply circuit resistance.

9. An electric vehicle battery charger according to any preceding claim wherein the charging controller includes means to detect if a temperature threshold has been reached and switching the battery cell charging protocol between sequential and parallel charging schemes.

10. An electric vehicle battery charger according to any preceding claim wherein the current draw on the connected power supply is increased until a voltage drop is in the power supply is detected, whereupon a maximum current draw on the power supply is determined to be the last current value where no voltage drop was detected.

11. A method of charging an electric vehicle battery comprising:
identifying parameters of a power supply connected to the battery charger;
regulating a charging current to a vehicle battery in accordance with the identified parameters;
wherein the charging controller determines an initial maximum charging current based upon the geographic location of the power supply.

12. A method of charging an electric vehicle battery according to claim 12 wherein the current draw on the connected power supply is increased until a voltage drop is in the power supply is detected, whereupon a maximum current draw on the power supply is determined to be the last current value where no voltage drop was detected

13. A charging controller for use in the method of claim 11 or 12.

14. An electric vehicle battery charger as described herein and according to Figures 1-5.
